# EUROPEAN PATENT APPLICATION

(11) **EP 1 721 644 A1**
(43) Date of publication of application: **15.11.2006**
(21) Application number: 05008802.0
(22) Date of filing: 21.04.2005
(51) Int. Cl.: A63F 13/06

(54) **A portable wireless control apparatus**

(71) Applicant: Chainpus Technology Co., Ltd., Danshui Town Tapei County (TW)
(72) Inventor: Wu, Wen-An, Danshui Town Taipei County (TW)
(74) Representative: Viering, Jentschura & Partner

(57) **Abstract**

A portable wireless control apparatus, which is developed and suitable for all cellular phones or PDA (personal digital assistant). The apparatus of the invention can adjust its clamping arms to clamp different cellular phone or PDA. The arms of the apparatus can be drawn in when it is not used, which is convenient in being carried with user.

## Description

### BACKGROUND OF THE INVENTION

### 1. Field of the Invention

The invention is about a portable wireless control apparatus, and more particularly to a game control apparatus can be applied in all cellular phones or PDA(personal digital assistant).

### 2. Description of the Prior Art

For prior game stick applied in cellular phones or PDA, its connector has to be a specific connector, which is only suitable for single application or company's product, and not easy to carry due to its dimensions. Recently, the problem can be solved because of the wireless technology. However, the prior wireless game stick is only suitable for single application or company's product, which is not convenient for consumers. The consumers have to change another game stick when they change cellular phone or PDA, and it costs lot.

### SUMMARY OF THE INVENTION

One object of the invention is to provide a portable wireless control apparatus. Which is developed for all cellular phones or PDA, not only for single application or company's product.

A portable wireless control apparatus, comprising a transmitter and a receiver, wherein the transmitter comprises:
a left-rotatory clamping arm with at least one direction control key;
a right-rotatory clamping arm with a plurality of function keys;
a base with the left-rotatory clamping arm locating in the left, and the right-rotatory clamping arm locating in the right;
a wireless circuitry module, which transmits a control signal via wireless mode;
and,the receiver comprises:
   a driving program, which makes the receiver automatically receive the control signal from the wireless circuitry module; and
   a communication apparatus loading the driving program, which operates with its internal program in response to the control signal; wherein the communication apparatus loads the driving program, and the left-rotatory and right-rotatory clamping arms can adjust to clamp the communication apparatus in response to shape of the communication apparatus, and when the driving program starts, it automatically detects the connection status, moreover, the function keys can be set according to personal like.

The user can decide if he want to clamp the cellular phone on the apparatus of the invention. When the user want to clamp cellular phone or PDA on the apparatus, he can adjust the clamping arms of the apparatus to be suitable for all similar products. And the apparatus is installed with an intelligent software, which enable the apparatus to connect with, when the software starts. Meanwhile, the keys of the apparatus can be set according to different habits of users. When battery is low, there is a power indicating light indicating the user to change the battery.

The apparatus can be drawn in, when it is not used, to shrink the dimensions, therefore it is easy to be carried with the user.

### BRIEF DESCRIPTION OF THE DRAWINGS

The drawings disclose an illustrative embodiment of the present invention which serves to exemplify the various advantages and objects hereof, and are as follows:
FIG. 1A is a perspective view of one embodiment of the invention;
FIG. 1B is another perspective view of one embodiment of the invention;
FIG. 1C is a perspective three-dimensional view of the invention;
FIG. 2A is a first diagram of operation steps of the invention;
FIG. 2B is a second diagram of operation steps of the invention;
FIG. 2C is a third diagram of operation steps of the invention;
FIG. 3A is a first diagram of drawing-in steps of the invention;
FIG. 3B is a second diagram of drawing-in steps of the invention;
FIG. 3C is a third diagram of drawing-in steps of the invention;
FIG. 4 is a perspective view of internal mechanism of the invention;
FIG. 5 is a perspective view of structure of the invention; and
FIG. 6 is a corresponding flow chart between hardware and software of the invention.

### [parts list]

1 base
2 left-rotatory clamping arm
21 direction control key 22 left key 23 adjustable spacer
3 right-rotatory clamping arm
31 function keys 32 right key 33adjustable spacer 34 switch 35 power indicating light
4 communication apparatus
41 intelligent cellular phone
5 buffer mechanism
6 fixing switch
61 stop mechanism
7 linkage
71 left gear 72 right gear
8 fixing apparatus
81 fixing switch
9 recovering spring
10battery
11 DC/DC converter
12multipoint control unit
13input apparatus
14wireless circuitry module
15 antenna
100 installing driving program
101 installation successful or not
102 enabling portable wireless control apparatus
103 regular one flash of orange LED light
104 need to change battery
105 regular one flash of green LED light
106 switching to "Gamepad config" page
107 selecting "Active Gamepad" to connect with the portable wireless control apparatus
108 automatically searching portable wireless control apparatus
109 connecting successfully or not
110 regular two flashes of orange LED light
111 need to change battery
112 regular two flashes of green LED light
113 selecting "Reconnection" to reconnect with the portable wireless control apparatus
114 setting up "Power Saving mode"
115 selecting "Defind L-Fn" to define left key
116 selecting "Defind R-Fn" to define right key
117 selecting "Defind button A" to define button A
118 selecting "Defind button B" to define button B
119 selecting "Defind button C" to define button C
120 selecting "Defind button D" to define button D
121 starting to use the portable wireless control apparatus

### DETAILED DESCRIPTION OF THE PREFERRED EMBODIMENT

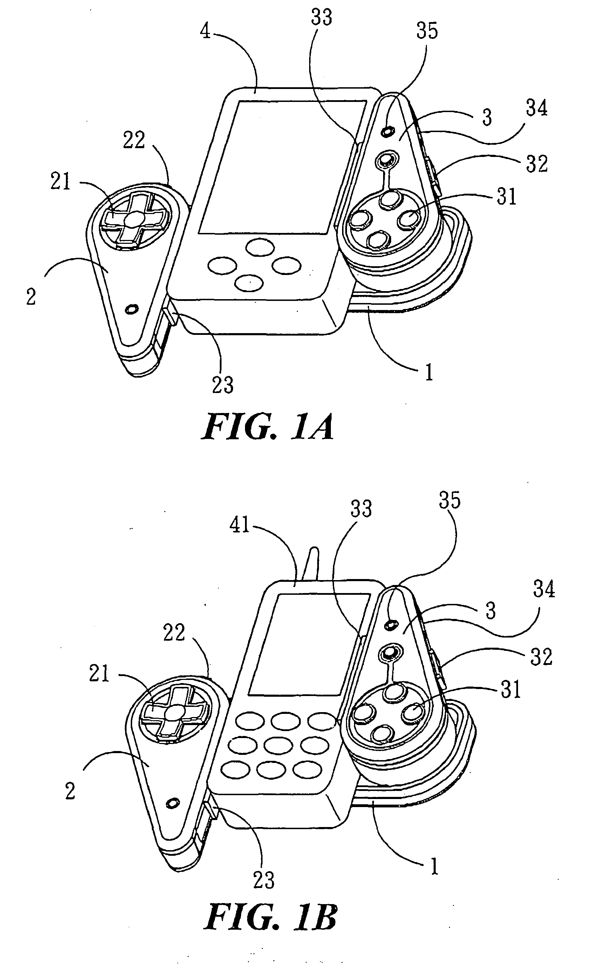

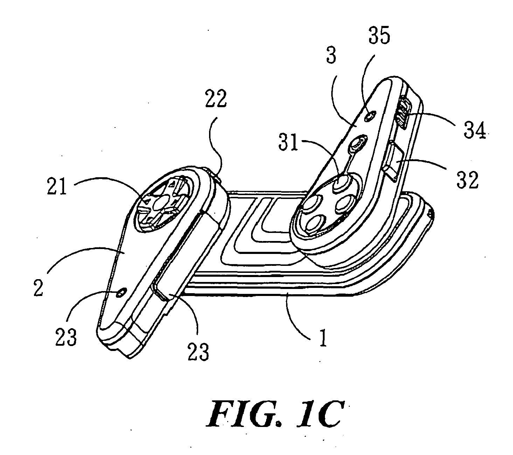

FIG. 1A is a perspective view of one embodiment of the invention, and FIG. 1C is a perspective three-dimensional view of the invention. The user puts a communication apparatus 4 on a base 1, then adjusts a right-side spacer 23 of a left-rotatory clamping arm 2 and a left-side spacer 33 of a right-rotatory clamping arm 3 to clamp the communication apparatus 4 by the left-rotatory clamping arm 2 and clockwise clamp arm 3, according to the dimensions of the communication apparatus 4. There is a direction control key 21 on the left-rotatory clamping arm 2, and a Left key 22 on the upper side of the left-rotatory clamping arm 2. There are a plurality of function keys 31, comprising key A, B, C, D,on the right-rotatory clamping arm 3, and the user can set these keys up according to different habits. And there is a Right key 32 on the right side of the right-rotatory clamping arm 3, which enables the user to have another choice when setting up these function keys. There is a power switch 34 up the Right key 32. There is a intelligent power indicating light 35 for indicating the user to change battery. FIG. 1 B is another perspective view of one embodiment of the invention.

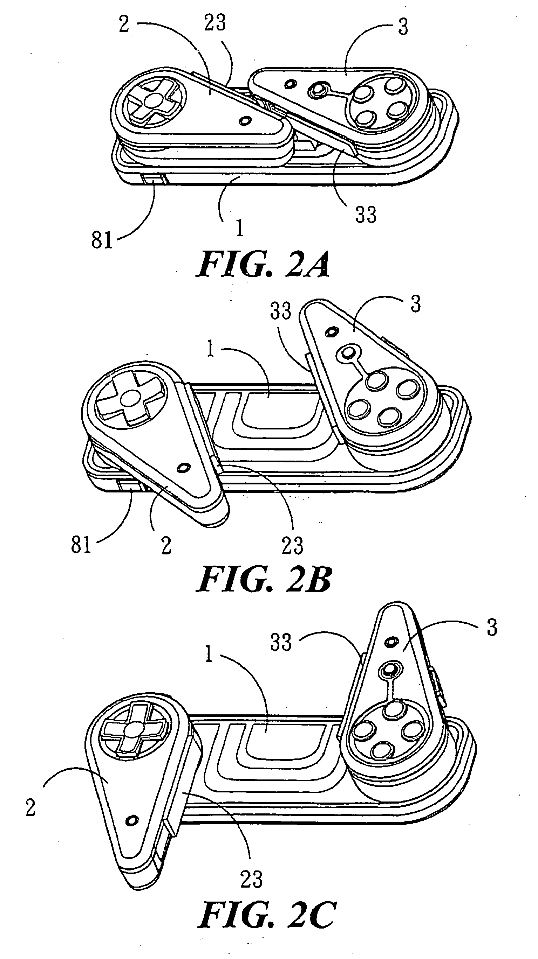

Referring to FIG. 2A, 2B, and 2C, when the user wants to user the apparatus of the invention, he needs to rotate the left-rotatory clamping arm 2 in 90 degree toward down direction, and to rotate the right-rotatory clamping arm 3 in 90 degree toward up direction, to move the arms away from the base1.

If the user does not want to clamp the communication 4, he can rotate the left-rotatory clamping arm 2 and the right-rotatory clamping arm 3 to maximum angle, then a fixing switch 81 springs out to fix the left-rotatory clamping arm 2 and right-rotatory clamping arm 3 in position. When the user presses the fixing switch 81, he can release the fixed arms.

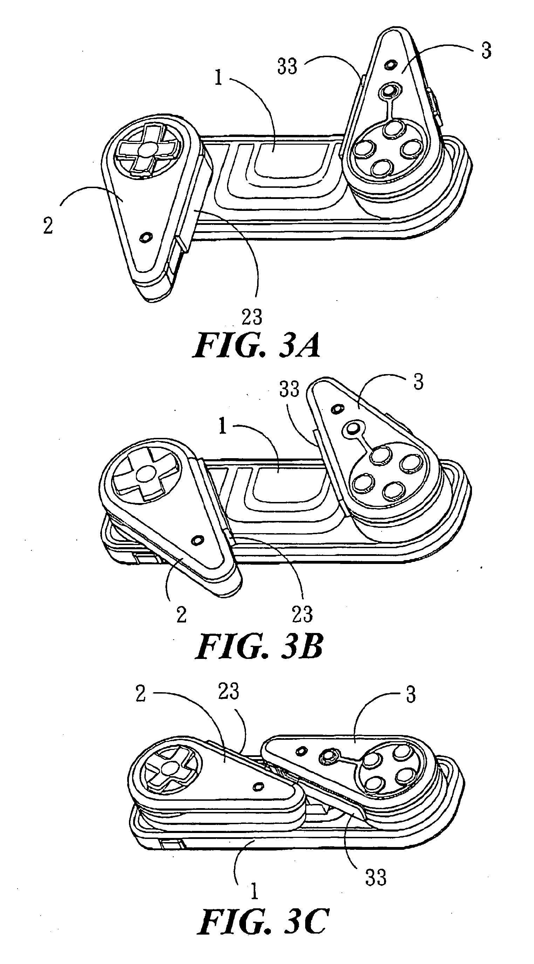

Referring to FIG. 3A, 3B, and 3C, when the user wants to draw in the apparatus of the invention, he takes the communication apparatus 4 out. Then he rotates the left-rotatory clamping arm 2 in 90 degree toward up direction, and rotates the right-rotatory clamping arm 3 in 90 degree toward down direction, to draw the arms in till the arms touch each other on the base 1, which makes it convenient to be carried with the user.

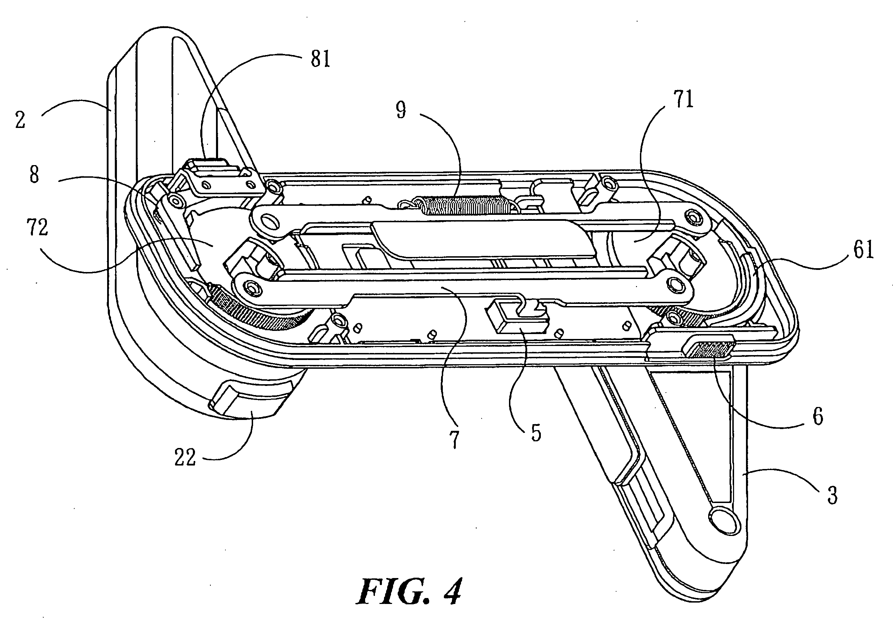

Referring to FIG. 4, when the user rotates the left-rotatory clamping arm 2 toward down direction, or rotates the right-rotatory clamping arm 3 toward up direction, it drives a left gear 71 or a right gear 72. There are two linkages 7 and a recovering spring 9 linking the left gear 71 and the right gear 72, which make the arms move in symmetrical mode. By the linkage 7, the arms rotate in same angle and relative same position, and the recovering spring 9 will be pulled.

When the user strongly rotates the left-rotatory clamping arm 2 or the right-rotatory clamping arm 3, a buffer mechanism 5 reduces the strength and protect the apparatus from being damaged. When the user rotates the left-rotatory clamping arm 2 and right-rotatory clamping arm 3 to proper position, he can pull the fixing switch 6 to make a stop mechanism 61 touch the gear with an element, then fix the left-rotatory clamping arm 2 and right-rotatory clamping arm 3.

If the user does not want to clamp the communication 4, he can rotate the left-rotatory clamping arm 2 and the right-rotatory clamping arm 3 to maximum angle , then a fixing switch 81 springs out to fix the left-rotatory clamping arm 2 and right-rotatory clamping arm 3 in position. When the user presses the fixing switch 81, he can release the fixed arms.

When the user wants to draw in the apparatus of the invention, he rotates the left-rotatory clamping arm 2 in 90 degree toward up direction, and rotates the right-rotatory clamping arm 3 in 90 degree toward down direction, to drive the left gear 71 and right gear 72 and draw the arms into proper position by the recovering spring 9 on the linkage 7.

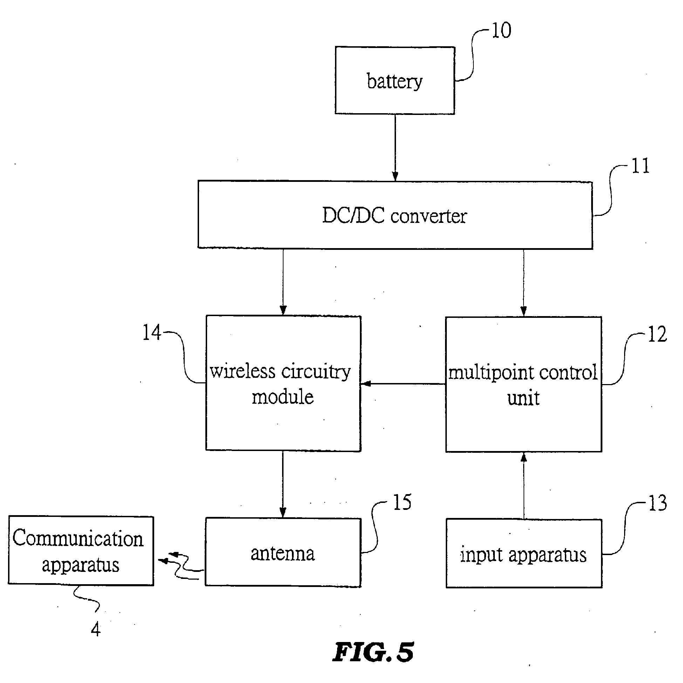

FIG. 5 is a perspective view of structure of the invention. A battery 9 provides power via a DC/DC converter 10. Then the power is delivered to a multipoint control unit 11, and a wireless circuitry module 13. When an input apparatus 12 transmits a control signal to the multipoint control unit 11, the multipoint control unit 11 transmits the control signal to the wireless circuitry module 13. The wireless circuitry module 13 then transmits the control signal to the communication apparatus 4 via an antenna 14.

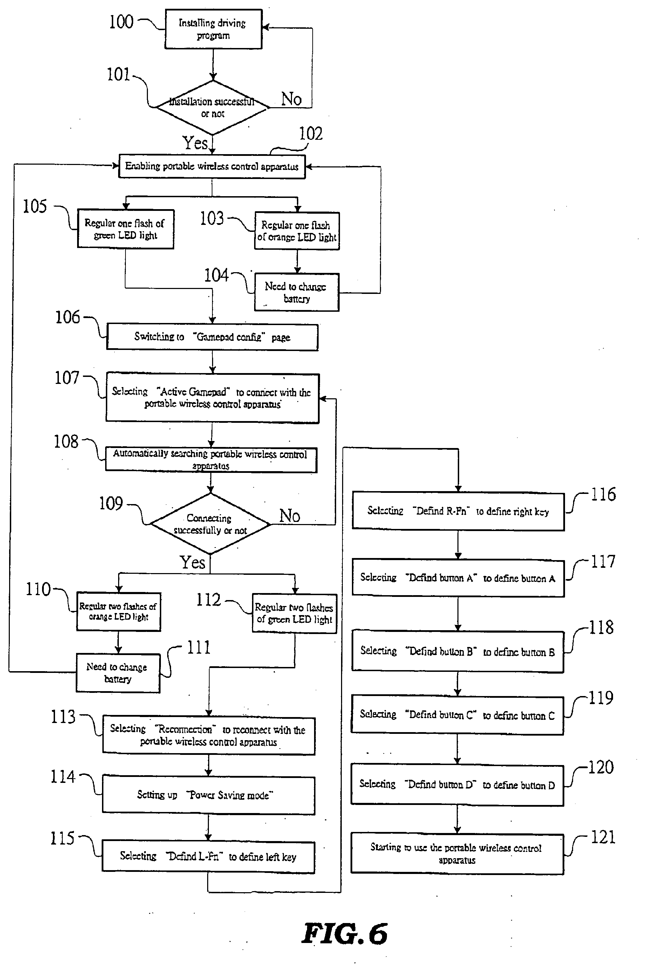

FIG. 6 is a corresponding flow chart between hardware and software of the invention. It starts from processing
"100 installing driving program",
   then it goes to
"101 judging if the installation were successful or not",
   if not, it needs to reinstall driving program;
   if successful, it goes to
"102 enabling the portable wireless control apparatus by the user".
   After these, if it shows
"103 regular one flash of orange LED light",
   then it goes to
"104 need to change battery", and
"102 enable the portable wireless control apparatus again".
   After enabling the apparatus, if it shows
"105 regular one flash of green LED light",
   it goes to
"106 switching the driving program of the communication apparatus 4 to "Gamepad config" page", then
"107 selecting "Active Gamepad" to connect with the portable wireless control apparatus",
   then it goes to
"108 automatically searching portable wireless control apparatus",
   then it goes to judge
"109 connection successful or not".
   If not, the user operates again from step 107.
   If the connection is successful, and it shows
"110 regular two flashes of orange LED light",
   then it goes to
"111 needing to change battery", and enable the apparatus again.
   If it shows
"112 regular two flashes of green LED light",
   then it goes to
"113 selecting "Reconnection" on the communication 4 to reconnect with the portable wireless control apparatus".
   Then the user can do
"114 setting up "Power Saving mode" of the communication apparatus 4",
"115 selecting "Defind L-Fn" to define left key",
"116 selecting "Defind R-Fn" to define right key",
"117 selecting "Defind button A" to define button A",
"118 selecting "Defind button B" to define button B",
"119 selecting "Defind button C" to define button C",
"120 selecting "Defind button D" to define button D", and
"121 starting to use the portable wireless control apparatus".

Many changes and modifications in the above described embodiment of the invention can, of course, be carried out without departing from the scope thereof. Accordingly, to promote the progress in science and the useful arts, the invention is disclosed and is intended to be limited only by the scope of the appended claims.

## Claims

1. A portable wireless control apparatus, comprising a transmitter and a receiver, wherein the transmitter comprises:
a left-rotatory clamping arm (2) with at least one direction control key (21);
a right-rotatory clamping arm (3) with a plurality of function keys (31);
a base with the left-rotatory clamping arm (2) locating in the left, and the right-rotatory clamping arm (3) locating in the right;
a wireless circuitry module (14), which transmits a control signal via wireless mode;
and,the receiver comprises:
a driving program, which makes the receiver automatically receive the control signal from the wireless circuitry module (14); and
a communication apparatus (4) loading the driving program, which operates with its internal program in response to the control signal;
wherein the communication apparatus (4) loads the driving program, and the left-rotatory clamping arm (2) and right-rotatory clamping arms (3) can adjust to clamp the communication apparatus (4) in response to shape of the communication apparatus (4), and when the driving program starts, it automatically detects the connection status, moreover, the function keys (31) can be set according to personal like.

2. the apparatus of claim 1, wherein the controllable directions are up, upper left, upper right, down, down left, down right, left, and right.

3. the apparatus of claim 1, wherein the left-rotatory clamping arm (2) comprises a left key (22) or an adjustable spacer (23).

4. the apparatus of claim 1, wherein the left-rotatory clamping arm (2) can be in shape of waterdrop like, rectangle, or ellipse.

5. the apparatus of claim 1, wherein the right-rotatory clamping arm (3) can comprises a power indicator light (35) indicating user whether the power enough or not, a power switch (34), a right key (32), or an adjustable spacer (33).

6. the apparatus of claim 1, wherein the right-rotatory clamping arm (3) can be in shape of waterdrop like, rectangle, or ellipse.

7. the apparatus of claim 1, wherein the base can be in shape of cambered rectangle, rectangle, or ellipse.

8. the apparatus of claim 1, wherein the base further comprises a buffer mechanism (5) and a stop mechanism (61) buffing the left-rotatory clamping arm (2) or right-rotatory clamping arm (3) when it rotates too fast, and fixing the left-rotatory clamping arm (2) and right-rotatory clamping arms (3).

9. the apparatus of claim 1, wherein the wireless circuitry module (14) can be a Bluetooth module, a infrared ray module, or IEEE 802.11 b.

10. the apparatus of claim 1, wherein the communication apparatus (4) can be an intelligent cellular phone or a PDA.
